Europäisches Patentamt

(19) European Patent Office

Office européen des brevets

(11) Veröffentlichungsnummer: **0 143 868**
B1

# (12) EUROPÄISCHE PATENTSCHRIFT

(45) Veröffentlichungstag der Patentschrift:
28.06.89

(51) Int. Cl.⁴: **B 65 G 49/04**, B 05 C 13/02

(21) Anmeldenummer: 84103351.7

(22) Anmeldetag: 27.03.84

(54) Behandlungsvorrichtung zur Behandlung von Gegenständen.

(30) Priorität: 01.12.83 DE 3343544

(43) Veröffentlichungstag der Anmeldung:
12.06.85 Patentblatt 85/24

(45) Bekanntmachung des Hinweises auf die Patenterteilung: 28.06.89 Patentblatt 89/26

(84) Benannte Vertragsstaaten:
AT BE CH DE FR GB IT LI LU NL SE

(56) Entgegenhaltungen:
DE–A– 1 756 720
DE–A– 2 708 103

(73) Patentinhaber: Carl August Heinz Glashüttenwerke GmbH & Co. KG
Kleintettau Hauptstrasse 47
D-8641 Tettau/Obf. (DE)

(72) Erfinder: Söllner, Reinhard
Alte Tettauer Strasse 24 Kleintettau
D-8641 Tettau/Obfr (DE)
Erfinder: Schneider, Wolfgang
Tettauer Strasse 33 Kehlbach
D-8641 Steinbach am Wald (DE)

(74) Vertreter: Feldkamp, Rainer, Dipl.-Ing. et al
Patent Attorneys Dipl.-Ing. Curt Wallach Dipl.-Ing. Günther Koch, Dr. Tino Haibach Dipl.-Ing. Rainer Feldkamp Kaufinger Strasse 8
D-8000 München 2 (DE)

## Beschreibung

Die Erfindung bezieht sich auf eine Behandlungsvorrichtung der im Oberbegriff des Patentanspruchs 1 genannten Art.

Die Behandlung von Gegenständen mit unterschiedlichen flüssigen und/oder gasförmigen Medien, beispielsweise zum Mattieren von Glasgegenständen, zum Reinigen von Gegenständen und in der Galvanotechnik erfolgt in vielen Fällen von Hand, wobei die zu behandelnden Gegenstände zumeist gruppenweise in entsprechende Tauchbäder eingetaucht werden. Hierbei ergeben sich Gesundheitsgefahren für die Personen, die die Behandlung durchführen, da die Tauchbäder zumeist aggressive Medien enthalten.

Es sind weiterhin Behandlungsvorrichtungen der eingangs genannten Art bekannt (DE-A-27 08 103), bei denen ein Drehturm vorgesehen ist, an dessen Umfang unter gleichen Winkelabständen Behandlungsstationen angeordnet sind, die Tauchbäder einschließen. Der Drehturm haltert an seinem oberen Bereich oberhalb der Behandlungsstationen Transport- und Betätigungsvorrichtungen, die ein Absenken von zu behandelnden Gegenständen an den einzelnen Behandlungsstationen sowie eine Bewegung der Gegenstände in diesen Behandlungsstationen ermöglichen. Die Steuerung der Transport- und Betätigungsvorrichtungen ist hierbei jedoch kompliziert, und zwar insbesondere dann, wenn diese Transport- und Betätigungsvorrichtungen zusätzliche Bewegungen ausführen sollen, beispielsweise um eine Entfernung von anhaftenden Badrückständen nach der Behandlung und vor der Bewegung von einer Behandlungsstation zur anderen zu ermöglichen. Die Übertragung von Steuerinformationen zwischen den Transport- und Betätigungsvorrichtungen, die drehbar an dem Drehturm gehaltert sind, und dem stationären Teil des Drehturmes stößt insbesondere deshalb auf Schwierigkeiten, weil die Behandlungsflüssigkeiten zumeist aggressiv sind, so daß die Verwendung von bekannten Schleifringanordnungen ausscheidet.

Der Erfindung liegt die Aufgabe zugrunde, eine Behandlungsvorrichtung der eingangs genannten Art zu schaffen, die eine vollautomatische beliebige Steuerung der Transport- und Betätigungsvorrichtungen an den einzelnen Behandlungsstationen in zuverlässiger Weise ermöglicht.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Behandlungsvorrichtung ist es ohne großen Aufwand möglich, eine Vielzahl von einzelnen Funktionen der Transport- und Betätigungsvorrichtungen zu steuern sowie Rückmeldesignale über die Postionen der einzelnen Teile der Transport- und Betätigungsvorrichtungen zu übertragen. Durch die erfindungsgemäße Ausgestaltung der Behandlungsvorrichtung ist weiterhin sichergestellt, daß Fehlfunktionen oder Fehlsteuerungen sicher ausgeschieden werden, da die Signale erst dann übertragen werden, wenn sich die Transport- und Betätigungsvorrichtungen an ihrer mit einer Behandlungsstation ausgerichteten Position befinden.

Gemäß einer bevorzugten Ausgestaltung der Erfindung sind die Signalübertragungseinheiten durch Optokoppler ausgebildet, die vollständig gekappselt ausgebildet sein können, so daß ihr Betrieb in Bereich aggressiver Medien absolut betriebssicher möglich ist.

Die erfindungsgemäßen Signalübertragungseinrichtungen können gleichzeitig eine Vielzahl von Signalen übertragen, so daß die Transport- und Betätigungsvorrichtungen selbst bei aufwendiger Ausgestaltung sehr genau und zuverlässig gesteuert werden können. Insbesondere können die Transport- und Betätigungsvorrichtungen auch zusätzliche Bewegungen, beispielsweise zum Abfließenlassen von an den Gegenständen anhaftenden Rückständen der Behandlungsflüssigkeiten ausführen. Durch die unabhängige Steuerung der einzelnen Transport- und Betätigungsvorrichtungen wird weiterhin eine schnelle und zuverlässige Behandlung von Gegenständen ermöglicht, da die Verweilzeit der Gegenstände an den einzelnen Behandlungsstationen genau gesteuert werden kann und die einzelnen Gegenstände oder Gruppen von Gegenständen für eine unterschiedliche Zeitdauer in die einzelnen Tauchbäder eingetaucht und dann wieder herausgezogen werden können.

Ausführungsbeispiele der Erfindung werden im folgenden anhand der Zeichnungen noch näher erläutert.

In der Zeichnung zeigen :

Figur 1 eine Seitenansicht einer Ausführungsform der Behandlungsvorrichtung,

Figur 2 eine vereinfachte Draufsicht auf die Behandlungsvorrichtung nach Fig. 1, wobei die Auslegerarme fortgelassen sind,

Figur 3 eine Seitenansicht der Aufnahmevorrichtung eines in Fig. 6 gezeigten Transport- und Betätigungsarmes,

Figur 4 eine Seitenansicht der Aufnahmevorrichtung nach Fig. 3,

Figur 5 eine vereinfachte Seitenansicht einer Ausführungsform einer Ausgabevorrichtung für die zu behandelnden Gegenstände,

Figur 6 eine teilweise geschnittene Ansicht einer Ausführungsform eines Transport- und Betätigungsarmes.

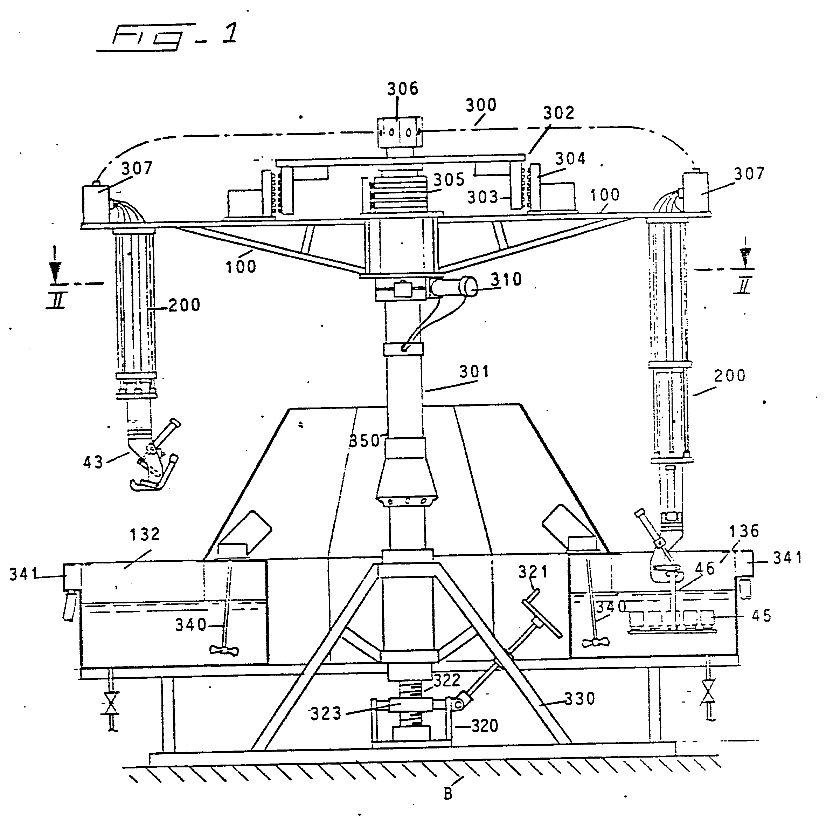

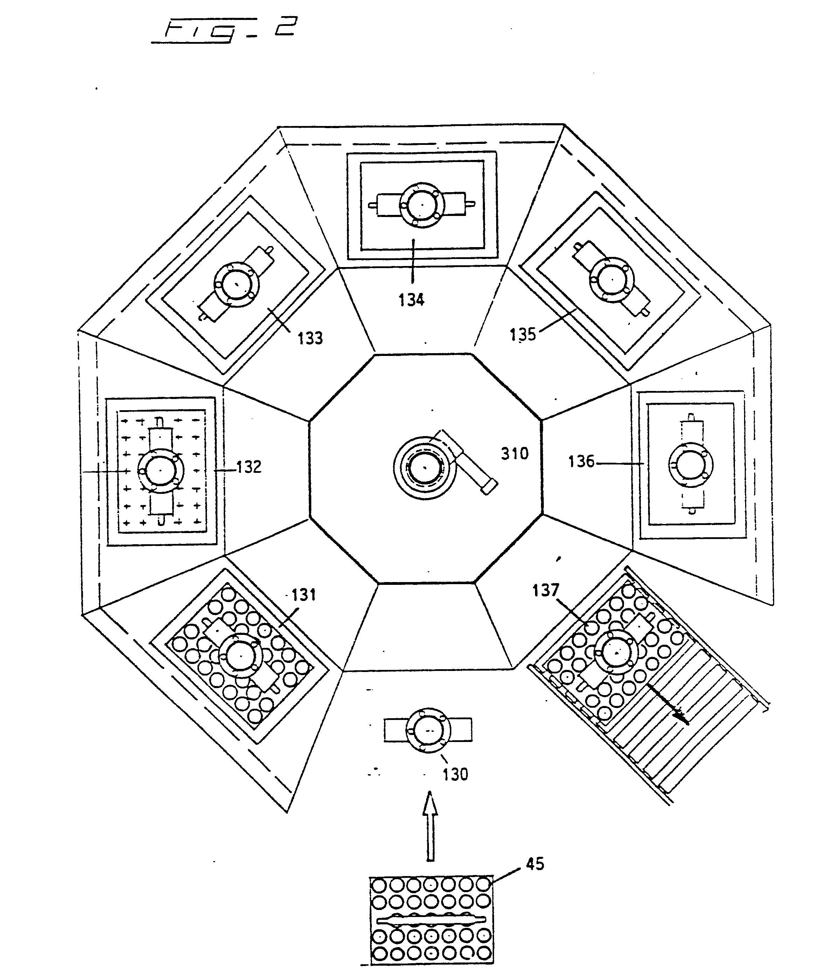

Die in Fig. 1 dargestellte Ausführungsform der Behandlungsvorrichtung weist einen insgesamt mit 300 bezeichneten Drehturm auf, dessen stationärer säulenförmiger Teil 301 über eine insgesamt mit 320 bezeichnete Höhenverstelleinrichtung heb- und senkbar ist. Diese Höhenverstelleinrichtung besteht aus einem Handrad 321, das eine Spindelmutter 323 in Drehung versetzt, die in Axialrichtung festgelegt ist und eine Spindel 322 antreibt. An dem stationären Teil ist weiterhin eine Einführungsvorrichtung 350 für Leitungen für ein Druckströmungsmedium, beispielsweise Luft, sowie Signal- und Speiseströme für elektrische Einrichtungen der Behandlungsvorrichtung angeordnet. Der stationäre Teil 301 trägt weiterhin einen Drehverteiler 306 für das Druckströmungsmedium sowie eine Schleifringanordnung 305 für Speiseströme. An dem stationären Teil 301 des Drehturms ist eine Anzahl von Auslegerarmen 100 drehbar gelagert, die mit Hilfe eines Klinkenschaltwerkes 310 in Drehung versetzbar sind. Um den Umfang des Drehturmes herum ist in der aus Fig. 2 erkennbaren Weise eine Anzahl von Behandlungsstationen 130 bis 137 angeordnet, von denen die Behandlungsstation 130 eine Eingabestation bildet, während die Station 137 eine Ausgabestation bildet. Die übrigen Behandlungsstationen können durch Tauchbäder sowie Trocknungsstationen gebildet sein, wobei die Tauchbäder Behandlungsflüssigkeiten oder Reinigungsflüssigkeiten enthalten können.

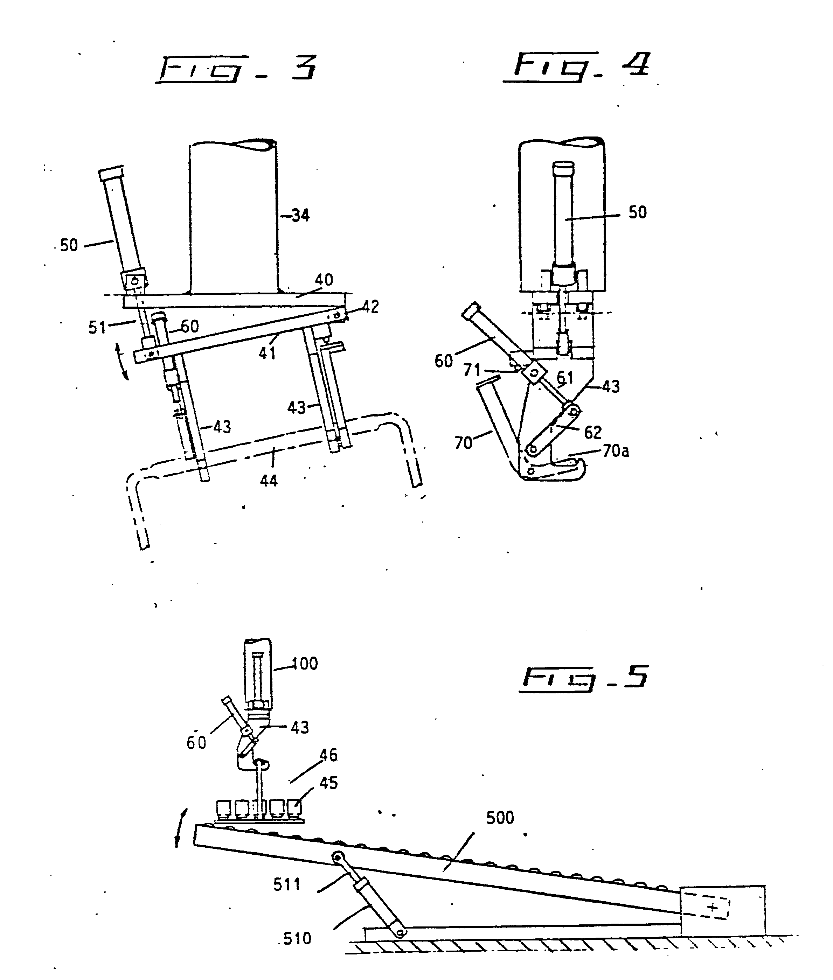

Die Anzahl der Auslegerarme 100 entspricht vorzugsweise der Anzahl der Behandlungsstationen, in dem dargestellten Ausführungsbeispiel also acht Behandlungsstationen. An jedem Auslegerarm 100 ist ein Transport- und Betätigungsarm 200 befestigt, der ausführlicher in den Figuren 3, 4 und 6 dargestellt ist.

Jeder Transport- und Betätigungsarm 200 umfaßt zwei hintereinander in Reihe angeordnete Kolben-Zylinderanordnungen 10 bis 12 bzw. 20 bis 22, wobei die Zylinder 12, 22 der beiden Kolben-Zylinderanordnungen zu einem einzigen Zylinder 1 vereinigt sind, der durch eine Trennwand 1a getrennt ist. Die erste Kolben-Zylinderanordnung weist einen Kolben 10 auf, der in dem Zylinder 12 beweglich ist und mit einer Kolbenstange 11 verbunden ist, die an der Aufhängungsvorrichtung 100 befestigt ist. Die zweite Kolben-Zylinderanordnung weist einen Kolben 20 auf, der in dem Zylinder 22 beweglich ist und mit einer Kolbenstange 21 verbunden ist, die über ein Verbindungsstück 34 mit einem noch näher zu erläuternden Zwischenglied 40 bis 42 verbunden ist. Am Außenumfang des gemeinsamen Zylinders 1 sind mehrere Teleskop-Verdrehsicherungen 31, 32 angeordnet, die ebenfalls an der Aufhängungsvorrichtung 100 befestigt sind. Diese Verdrehsicherungen 31, 32 sind an dem Verbindungsstück 43 über eine gemeinsame Platte 33 befestigt und können gleichzeitig zur Zuführung eines Druckströmungsmediums an weitere, an der Aufnahmevorrichtung 43 angeordnete Kolben-Zylinderanordnungen dienen. Diese Aufnahmevorrichtung 43 besteht bei der dargestellten Ausführungsform aus einem Haken, in den ein Griff 44 eines Transportkorbens 46 für die zu behandelnden Gegenstände 45 einhängbar ist. Diese Aufnahmevorrichtung 43 ist an dem Zwischenstück 34 über ein Zwischenglied 40 bis 42 betestigt, das aus zwei Teilen 40, 41 besteht, die um eine Achse 42 gegeneinander verschwenkbar sind. Diese Verschwenkbewegung wird durch eine Kolben-Zylinderanordnung 50, 51 gesteuert, deren Zylinder 50 an dem einen Teil 40 des Zwischengliedes befestigt ist, während ihre Kolbenstange an dem zweiten Teil 41 befestigt ist.

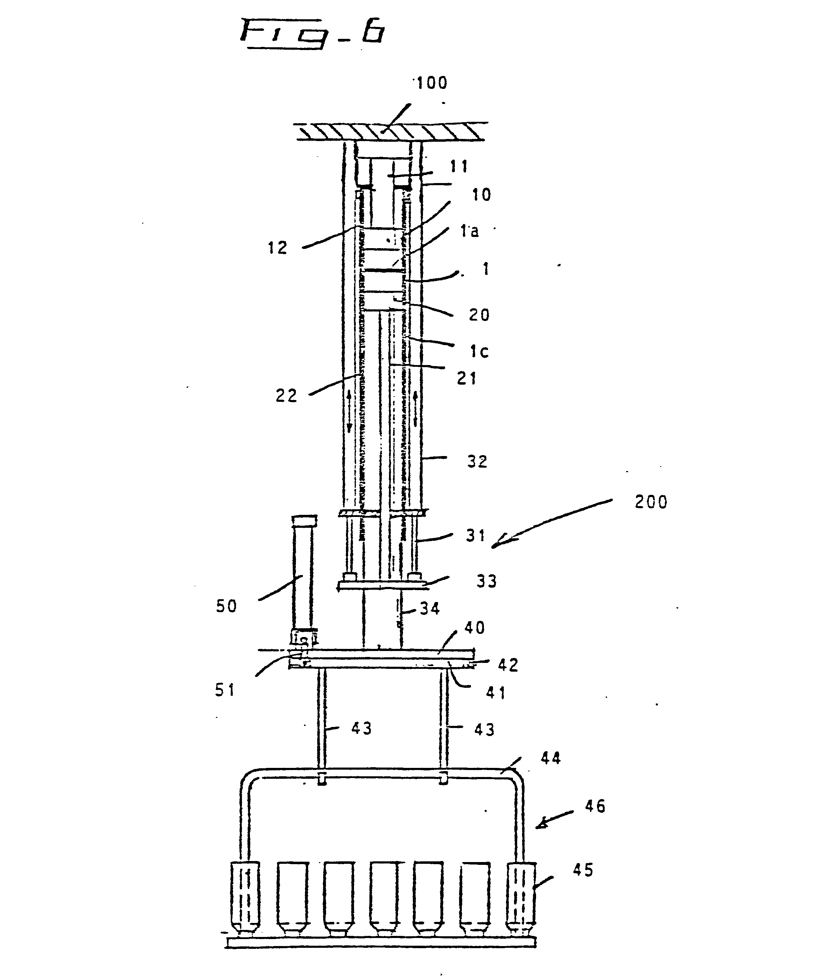

Fig. 3 zeigt dieses Zwischenglied in einer gegenüber der Fig. 6 verschwenkten Stellung, wobei diese Verschwenkbewegung vorzugsweise dazu dienen kann, nach dem Herausheben an den Gegenständen verbleibende Behandlungsflüssigkeiten abtropfen zu lassen.

Durch die Verwendung von zwei hintereinander in Reihe angeordneten Kolben-Zylinderanordnungen ist es bei minimalem Strömungsmittelverbrauch möglich, die Aufnahmevorrichtung 43 und damit die Gegenstände über einen großen Hub in einzelne Bäder einzutauchen und dann mit Hilfe der zweiten Kolben-Zylinderanordnung 10 bis 12 einer Auf- und Abbewegung mit kleinerem Hub zu unterwerfen, um die Behandlungswirkung zu verbessern.

Wie dies insbesondere aus Fig. 4 zu erkennen ist, ist eine Verriegelungsvorrichtung 60 bis 62 zur Verriegelung des Griffes 44 in dem Haken 43 vorgesehen. Diese Verriegelungsvorrichtung besteht aus einem Zylinder 60 mit einem Kolben, dessen Kolbenstange 61 schwenkbar mit einem Verriegelungsglied 62 verbunden ist, das auf die Oberseite des Griffes 44 gedrückt werden kann, um diesen in dem Haken 43 festzuhalten.

Die Tatsache, ob ein Haken 43 einen Transportkorb trägt, oder nicht, wird mit Hilfe einer Rückmeldeeinrichtung 70, 71 festgestellt, die durch einen Winkelhebel 70 gebildet ist, der mit einem Wandler 71 zusammenwirkt. Dieser Winkelhebel ist schwenkbar an dem Haken 43 befestigt und springt im Ruhezustand über die Auflagefläche des Hakens 43 vor, so daß der vorspringende Teil 70a von dem Griff eines Transportkorbes niedergedrückt werden kann, was dazu führt, daß der andere Teil des Winkelhebels gegenüber dem Wandler 71 angeordnet wird. Auf diese Art und Weise kann eine Betätigung eines Transport- und Betätigungsarms, der keinen Transportkorb trägt, vermieden werden, was insbesondere dann wesentlich ist, wenn eine große Vielzahl derartiger Transport- und Betätigungsarme in einer Anlage angeordnet ist und diese Transport- und Betätigungsarme nacheinander an den einzelnen Bädern vorbeilaufen.

Weiterhin sind vorzugsweise zusätzliche Rückmeldeeinrichtungen für die Position der einzelnen Kolben-Zylinderanordnungen vorgesehen, um eine vollautomatische Steuerung des Transport- und Betätigungsarms zu ermöglichen.

Obwohl in Fig. 4 lediglich eine Verriegelungseinrichtung dargestellt ist, können auch zwei Verriegelungsglieder 62, d. h. ein Verriegelungsglied pro Haken 43 verwendet werden, wobei diese beiden Verriegelungsglieder 62 dann entweder durch einen einzigen Zylinder 60 oder durch paarweise angeordnete Zylinder betätigbar sind.

Zur Übertragung von Steuersignalen an die Transport- und Betätigungsarme 200 sowie zur Übertragung von Positionsmeldesignalen von diesen Betätigungsarmen zu einer Steuereinheit dienen aus Fig. 1 erkennbare Signalübertragungseinrichtungen 302, die jeweils aus einer dem stationären Teil 301 zugeordneten Signalübertragungseinheit und einer dem jeweiligen Auslegerarm 100 zugeordneten Signalübertragungseinheit 304 bestehen. Diese Signalübertragungseinheiten bilden zusammen jeweils Optokoppler, deren Signalsender auf dem Auslegerarm und deren Signalempfänger auf dem stationären Teil angeordnet ist und umgekehrt. Die Signalübertragungseinheiten 303 auf dem stationären Teil sind jeweils benachbart zu einer Behandlungsstation angeordnet, so daß Signale von und zu der Signalübertragungseinheit 304 des an dieser Behandlungsstation angeordneten Transport- und Betätigungsarms 200 übertragen werden. Die auf den Auslegerarm 100 übertragenen Signale steuern beispielsweise Druckluftventile 307, deren Speisung zentral über den Drehverteiler 306 erfolgt.

Wie dies aus Figur 1 zu erkennen ist, weisen die Tauchbäder bildenden Behandlungsstationen ein Rührwerk 340 auf, das die in dem Tauchbad enthaltene Flüssigkeit dauernd umwälzt. Weiterhin sind vorzugsweise Absaugvorrichtungen 341 an den Rändern der jeweiligen Tauchbäder angeordnet, um die Abgabe schädlicher Dämpfe und Gase soweit wie möglich zu verhindern. Die Absaugvorrichtungen 341 der einzelnen Tauchbäder können auch insgesamt als einzige umlaufende Absaugvorrichtung ausgebildet sein und eine weitere Absaugvorrichtung kann auf der dem Drehturm zugewandten Seite der Tauchbäder, d. h. im Bereich der Rührvorrichtungen 340 angeordnet sein.

In Fig. 5 ist eine Ausführungsform einer Abgabevorrichtung 500 für die Abgabestation 137 dargestellt. Diese Abgabestation weist ein mit Hilfe eines Druckzylinders 510 anheb- und absenkbares Förderband 500 auf, das in angehobenem Zustand einen in der Aufnahmevorrichtung 43 eines Transport- und Betätigungsarmes 200 angeordneten Transportkorb aus dieser Aufnahmevorrichtung ausheben und von dieser fortbewegen kann.

Eine ähnliche Vorrichtung, jedoch mit umgekehrtem Schwerpunkt, könnte auch als Eingabevorrichtung Verwendung finden.

**Patentansprüche**

1. Behandlungsvorrichtung zur Behandlung von Gegenständen mit unterschiedlichen flüssigen und/oder gasförmigen Medien mit einer Anzahl von konzentrisch zu einem Drehturm (300) an dessen Umfang unter gleichen Winkelabständen angeordneten Behandlungsstationen (130-137), von denen eine (130) als Eingabevorrichtung und eine weitere (137) als Ausgabevorrichtung für die zu bearbeitenden Gegenstände ausgebildet ist, während andere Behandlungsstationen (131-136) durch Tauchbäder gebildet sind, in die die Gegenstände (45) eintauchbar sind, wobei der Drehturm (300) oberhalb der Behandlungsstationen an Auslegerarmen (100) eine der Anzahl der Behandlungsstationen (130-136) entsprechende Anzahl von Transport- und Betätigungsvorrichtungen (200) haltert, die ein Anheben und Absenken der Gegenstände (45) aus bzw. in die Behandlungsstationen (130-137) sowie eine Bewegung der Gegenstände (45) an diesen Behandlungsstationen ermöglichen, und wobei Signalübertragungseinrichtungen (302) von einem stationären Teil (301) des Drehturms (300) auf die die Transport- und Betätigungsvorrichtungen (200) tragenden Auslegerarme vorgesehen sind, dadurch gekennzeichnet, daß die Signalübertragungseinrichtungen durch erste, jedem Auslegerarm (100) zugeordnete und an diesem angeordnete Signalübertragungseinheiten (304) und zweite, jeder Behandlungstation (130-136) zugeordnete und mit diesen ausgerichtete Signalübertragungseinheiten (303) gebildet sind, die jeweils mit der Signalübertragungseinheit (304) desjenigen Auslegerarms (100) zusammenwirken, der zu einer vorgegebenen Zeit mit dieser Behandlungsstation ausgerichtet ist.

2. Vorrichtung nach Anspruch 1, dadurch gekennzeichnet, daß die Signalübertragungseinheiten (303, 304) durch Optokoppler-Baugruppen gebildet sind, deren Sender und Empfänger jeweils auf dem Auslegerarm (100) bzw. auf dem stationären Teil (301) des Drehturmes (300) gehaltert sind.

3. Vorrichtung nach Anspruch 1 oder 2, dadurch gekennzeichnet, daß an dem stationären Teil (301) des Drehturms (300) eine Schleifringanordnung (305) zur Zuführung von Speiseströmen an die Auslegerarme (100) angeordnet ist.

4. Vorrichtung nach einem der vorhergehenden Ansprüche, dadurch gekennzeichnet, daß die Transport- und Betätigungsvorrichtungen (200) Kolben-Zylinderanordnungen (10 bis 12, 20 bis 22) einschließen und daß an dem stationären Teil (301) des Drehturms (300) ein Drehverteiler (306) für ein Druckströmungsmedium zur Betätigung der Kolben-Zylinderanordnungen angeordnet ist.

5. Vorrichtung nach Anspruch 4, dadurch gekennzeichnet, daß auf den Auslegerarmen (100) eine Anzahl von über den Drehverteiler (306) gespeisten Druckströmungsmedium-Ventilen (307) angeordnet ist, die von Signalen von der dem Auslegerarm (200) zugeordneten Signalübertragungseinheit (304) steuerbar sind.

6. Vorrichtung nach einem der Ansprüche 4 oder 5, dadurch gekennzeichnet, daß Aufnahmevorrichtungen (43) für die zu behandelnden Gegenstände (45) mit den von den Auslegerarmen (100) abgewandten Enden der Kolben-Zylinderanordnungen (10 bis 12, 20 bis 22) über ein Zwischenglied (40 bis 42) verbunden sind, das eine Schwenkbewegung der Aufnahmevorrichtung (43) um eine zur Achse der Kolben-Zylinderanordnungen (10 bis 12, 20 bis 22) senkrechte Achse ermöglicht und daß eine weitere Kolben-Zylinderanordnung (50, 51) zum Verschwenken der Aufnahmevorrichtung (43) um diese Achse (42) vorgesehen ist.

7. Vorrichtung nach einem der Ansprüche 4 bis 6, dadurch gekennzeichnet, daß die Gegenstände (45) in einem Transportkorb (46) mit einem Griff (44) angeordnet sind, der in die als Haken (43) ausgebildete Aufnahmevorrichtung einhängbar ist, und daß eine durch eine Kolben-Zylinderanordnung (60, 61) gebildete Verriegelungsvorrichtung mit einem Verriegelungsbügel (62) vorgesehen ist, der an dem Haken (43) befestigt ist.

8. Vorrichtung nach einem der vorhergehenden Ansprüche, dadurch gekennzeichnet, daß Rückmeldeeinrichtungen für die Position der Kolben-Zylinderanordnungen (10 bis 12, 20 bis 22), des Zwischengliedes (40 bis 42) und der Verriegelungsvorrichtung (60 bis 62) vorgesehen sind, deren Ausgangssignalen alle über die Signalübertragungseinrichtungen (303, 304) geleitet werden.

## Claims

1. Treatment appliance for treating articles with various liquid and/or gaseous media, said appliance comprising a number of treatment stations (130-137) which are arranged concentrically with respect to a swivel-head tower (300), at equal angular intervals on its periphery, and of these treatment stations, one station (130) is configured as a loading apparatus, and a further station (137) is configured as an unloading apparatus for the articles to be processed, whereas other treatment stations (131-136) consist of dipping baths into which the articles (45) can be dipped, the swivel-head tower (300) carrying a number of transport and movement devices (200) on cantilever arms (100) above the treatment stations, this number corresponding to the number of treatment stations (130-137), said transport and movement devices (200) enabling the articles (45) to be lifted out of the treatment stations (130-137), or to be lowered into them, as the case may be, as well as enabling the articles (45) to be moved at these treatment stations, while signal-transmission arrangements (302) are also provided, transmitting signals from a stationary portion (301) of the swivel-head tower (300), to the cantilever arms carrying the transport and movement devices (200), characterized in that the signal-transmission arrangements are formed by first signal-transmission units (304), assigned to each cantilever arm (100) and installed thereon, and by second signal-transmission units (303), assigned to each treatment station (130-137) and aligned therewith, these second signal-transmission units (303) in each instance co-operating with the signal-transmission unit (304) assigned to that cantilever arm (100) which is aligned with this treatment station at a given time.

2. Appliance according to Claim 1, characterized in that the signal-transmission units (303, 304) consist of optical coupler modules, their transmitters and receivers in each case being mounted on the cantilever arm (100) and the stationary portion (301) of the swivel-head tower (300) respectively.

3. Appliance according to Claim 1 or 2, characterized in that a slip ring assembly (305) is installed on the stationary portion (301) of the swivel-head tower (300), said assembly serving to conduct supply currents to the cantilever arms (100).

4. Appliance according to any one of the preceding Claims, characterized in that the transport and movement devices (200) comprise piston/cylinder assemblies (10 to 12, 20 to 22), and in that a rotary distributor (306) for a pressurized fluid medium for operating said piston/cylinder assemblies is installed on the stationary portion (301) of the swivel-head tower (300).

5. Appliance according to Claim 4, characterized in that a number of pressurized fluid medium valves (307) are installed on the cantilever arms (100), these valves being supplied via the rotary distributor (306) and being controllable by signals from the signal-transmission units (304) assigned to the cantilever arms (100).

6. Appliance according to Claim 4 or 5, characterized in that holding devices (43) for the articles (45) to be treated are connected to those ends of the piston/cylinder assemblies (10 to 12, 20 to 22) which point away from the cantilever arms (100), connection being via an intermediate member (40 to 42) which enables the holding device (43) to execute a swinging movement about an axis at rightangles to the axis of the piston/cylinder assemblies (10 to 12, 20 to 22), and in that an additional piston/cylinder assembly (50, 51) is provided in order to swing the holding device (43) about this axis (42).

7. Appliance according to any one of Claims 4 to 6, characterized in that the articles (45) are arranged in a transport basket (46) with a handle (44) which can be slipped into the holding device, said device being configured as a hook (43), and in that a locking mechanism is provided, formed by a piston/cylinder assembly (60, 61) and possessing a locking yoke (62) that is fastened to the hook (43).

8. Appliance according to any one of the preceding Claims, characterized in that feedback systems are provided for signalling the positions of the piston/cylinder assemblies (10 to 12, 20 to 22), the position of the intermediate member (40 to 42), and the position of the locking mechanism (60 to 62), their output signals all being directed via the signal-transmission units (303, 304).

## Revendications

1. Dispositif pour le traitement d'objets au moyen d'agents liquides et/ou gazeux différents, comprenant un certain nombre de postes de traitement (130-137) disposés concentriquement autour d'une colonne tournante (300), sur sa périphérie et à des intervalles angulaires égaux, dont un (130) est constitué sous forme d'un dispositif d'alimentation et un autre (137) d'un dispositif d'évacuation pour les objets à traiter, alors que d'autres postes de traitement (131-136) sont constitués par des bains d'immersion dans lesquels peuvent être immergés les objets (45), la colonne tournante (300) supportant au-dessus des postes de traitement et sur des potences (100) un certain nombre de dispositifs de transport et d'actionnement (200) correspondant au nombre de postes de traitement (130-136), qui permettent le soulèvement et l'abaissement des objets (45) hors ou dans les postes de traitement (130-137) ainsi qu'un mouvement des objets (45) dans ces postes de traitement, et des dispositifs de transmission de signaux (302) étant prévus entre une partie fixe (301) de la colonne tournante (300) et les potences supportant les dispositifs de transport et d'actionnement (200), caractérisé en ce que les dispositifs de transmission de signaux sont constitués par des premières unités de transmission de signaux (304) associées à chaque potence (100) et monté sur celle-ci, et des secondes unités de transmission de signaux (303) associées à chaque poste de traitement (130-136) et en alignement avec ceux-ci, qui coopèrent respectivement avec l'unité de transmission de signaux (304) de la potence (100) qui se trouve en alignement à un moment prédéterminé avec ce poste de traitement.

2. Dispositif selon la revendication 1, caractérisé en ce que les unités de transmission de signaux (303, 304) sont constituées par des groupes d'opto-coupleurs dont les émetteurs et les capteurs sont montés respectivement sur la potence (100) ou sur la partie fixe (301) de la colonne tournante (300).

3. Dispositif selon la revendication 1 ou 2, caractérisé en ce qu'un agencement à bague collectrice (305) destiné au passage des courants d'alimentation appliqués aux potences (100) est montée sur la partie fixe (301) de la colonne tournante (300).

4. Dispositif selon l'une quelconque des revendications précédentes, caractérisé en ce que les dispositifs de transport et d'actionnement (200) comprennent des agencements à piston et cylindre (10 à 12, 20 à 22) et en ce qu'un distributeur tournant (306) destiné à un agent sous pression actionnant les agencements à piston et cylindre est prévu sur la partie fixe (301) de la colonne tournante (300).

5. Dispositif selon la revendication 4, caractérisé en ce qu'un certain nombre de soupapes à agent sous pression (307) alimenté par le distributeur tournant (306) sont prévues sur les potences (100) et peuvent être commandées par des signaux provenant de l'unité de transmission de signaux (304) qui est associée à la potence (200).

6. Dispositif selon la revendication 4 ou 5, caractérisé en ce que des dispositifs de support (43) destinés aux objets à traiter (45) sont reliés aux extrémités des agencements à piston et cylindre (10 à 12, 20 à 22) qui sont à l'opposé des potences (100) par un organe intermédiaire (40 à 42), qui permet un mouvement de pivotement du dispositif de support (43) autour d'un axe perpendiculaire à l'axe des agencements à piston et cylindre (10 à 12, 20 à 22) et en ce qu'un autre agencement à piston et cylindre (50, 51) est prévu pour faire pivoter le dispositif de support (43) autour de cet axe (42).

7. Dispositif selon l'une quelconque des revendications 4 à 6, caractérisé en ce que les objets (45) sont placés dans une corbeille transporteuse (46) comprenant une poignée (44) qui peut être suspendue au dispositif de support constitué sous forme de crochets (43), et en ce qu'un dispositif de verrouillage constitué par un agencement à piston et cylindre (60, 61) est muni d'un étrier de verrouillage (62) qui est fixé au crochet (43).

8. Dispositif selon l'une quelconque des revendications précédentes, caractérisé en ce que sont prévus des dispositifs à rétro-signaux pour la position des agencements à piston et cylindre (10 à 12, 20 à 22), de l'organe intermédiaire (40, 42) et du dispositif de verrouillage (60 à 62), dont les signaux de sortie sont tous appliqués aux dispositifs de transmission de signaux (303, 304).

FIG - 1

FIG - 2

310

134

133

135

132

136

131

137

130

45

Fig. 3

Fig. 4

Fig. 5

FIG_6